# EUROPEAN PATENT SPECIFICATION

(11) **EP 1 499 197 B1**
(45) Date of publication and mention of the grant of the patent: **02.01.2008**
(21) Application number: 03722552.1
(22) Date of filing: 24.04.2003
(51) Int. Cl.: A21D 4/00, A21D 2/14

(54) **DRY YEAST COMPOSITION**
TROCKENHEFE-KOMPOSITION
COMPOSITION DE LEVURE SECHE

(30) Priority: 25.04.2002 EP 02100413
(43) Date of publication of application: 26.01.2005
(73) Proprietor: GBI Holding B.V., 2625 NV Delft (NL)
(72) Inventor: GROEN, Deodorus, Jacobus, NL-3232 CV Brielle (NL); HACK, Cornelis, Jacobus, Adrianus, NL-4631 KA Hoogerheide (NL)
(74) Representative: van Heuvel, Margaretha
(86) International application number: PCT/EP2003/004370
(87) International publication number: WO 2003/090543

(56) References cited:
- EP-A- 0 616 030
- EP-A- 0 659 344

## Description

The present invention relates to a dry yeast composition, the production thereof and its use in the production of dough, bakery products and beverages.

The production of baker's yeast is well known and amply documented in the literature. A good example of a description of the production of baker's yeast is Reed, G. and Nagodawithana, T.W. (1991) Yeast Technology, 2nd ed., pp 261-314, Van Nostrand Reinhold, New York.

The manufacture of yeast starts with a small sample of a pure culture. This sample is used to inoculate the first of a series of fermentations in fermentors of successively increasing size. The first few are mildly aerated batch fermentations. Only the last two (or sometimes three) stages are performed using full aeration and incremental feeding of a carbon source, e.g. molasses. These fed-batch fermentations are carried out in fermentors having a volume of 100 m³ or more. Fermentation time is typically in the range of 12-20 hours, in which some 10,000-30,000 or more kg of compressed yeast are produced.

Further processing includes separating the yeast from the broth by centrifugation and washing, which results in yeast cream (17-23% (w/w) dry yeast matter content).

The yeast cream may be processed into compressed yeast (27-33% (w/w) dry yeast matter content) via filtration to obtain a yeast cake, which is compressed to blocks of desired weight, or the yeast cake may be extruded and dried to produce active dry yeast (ADY) or instant dry yeast (IDY) with moisture contents of 6-8% (w/w) and 2-8% (w/w), respectively.

In the case of ADY, drying usually takes place in belt or rotolouvre (drum) dryers. For IDY production fluidized-bed drying is commonly used. Drying of the yeast to a level of about 20% water content involves only the evaporation of free water. Further reducing of the moisture content involves the removal of a portion of the bound water from the yeast which may cause damage to the yeast cell membrane. In US patent 3,843,800 wetting agents such as esters of saturated fatty acids of glycerol and/or fatty acid esters of propylene glycol are added to preserve the desired high direct leavening activity of the yeast during the drying step.

Dry yeast loses part of its leavening activity during the drying process as well as during the rehydration procedure. Dry yeasts are still commonly used in the bakery trade because of their extended shelf life and because refrigeration is unnecessary.

Dry yeasts are used in wine making to obtain a fast and reproducible fermentation thereby minimizing the risk of failure of the natural fermentation. Moreover, the yeast is immediately available throughout the year.

Instant dry yeast (IDY) is the latest type of baker's yeast, introduced in the early 1970's (see for example US patent 3,843,800) a few years later followed by instant dry wine yeast (IWY), which can be seen as a special kind of instant dry yeast. To obtain a high quality IDY, yeast cake of relatively high protein content (42-60% (w/w)) must be dried in a quick-drying process. The maximal leavening activity of IDY under conditions of application is about 75-85% that of compressed yeast (on dry weight basis); the shelf life in a vacuum-sealed package is comparable to that of ADY.

IDY is presented typically in the form of very small rods that are highly porous and easy to rehydrate. On the one hand, this allows immediate use, without prior rehydration. On the other hand, the high porosity gives easy access to water and oxygen (from air), which results in a rather rapid loss of activity upon exposure to atmospheric conditions. For satisfactory results, IDY should be used within 3-5 days of opening of the package. Moreover, the high porosity of IDY makes it sensitive to extreme rehydration conditions.

IDY usually has a moisture content of 2-8% (w/w) and a protein content between 42 and 60% (w/w) on a dry matter basis. As with ADY, some manufacturers add antioxidants (e.g. BHA) to their product for improved stability. Ascorbic acid may be added to IDY products to improve their stability.

A problem encountered with ADY and IDY is the leakage of yeast solids from the cells upon rehydration. This results in a loss of gassing power or a loss of capacity to produce ethanol. The various methods of adding yeast and mixing dough differ from country to country. Although for the more porous IDY the dry yeast should be mixed with flour before water is added, it often happens that the dry yeast is suspended in water together with other soluble additions before flour is added. Additives such as sugar, calciumpropionate and salt affect yeast performance, as does the temperature of the water employed. In countries with warm climates or where bakers use high speed mixers with extra heat input, the water is cooled, for example by adding ice, to obtain proper dough temperatures after mixing. Under these conditions instant dry yeast comes in direct contact with the chilled water, thus reducing the yeast performance substantially. In US 4,764,472 this problem is partly solved by the incorporation of 0.1 to 2% by weight of locust bean gum, gum ghatti and mixtures thereof, which prevents a loss of activity when water of about 20°C is added. However, in practice, water of 15°C or less, even sometimes a water/ice mixture, is used and under these circumstances, the activity after rehydration is extremely low.

In EP-A-0616030, IDY is improved by adding a rehydration-controlling agent. A large variety of rehydrating controlling agents is suggested among which are esters of fatty acids (e.g. fatty acid esters of sorbitan such as sorbitan monolaureate, monopalmitate, monostearate or monooleate). Addition of sorbitan monostearate or glycerine monostearate resulted in an improved gassing activity of the IDY when the yeast is rehydrated before being mixed with other dough ingredients such as flour, water, and salt. The disadvantage of these agents is that, although some improvement in the (cold) water resistance of the yeast is obtained, still too much gassing power of the IDY is lost when the IDY is subjected to rehydration.

We have now surprisingly found that when 0.1-10% of a salt of a C₁₂-C₂₄ fatty acid is incorporated in a dry yeast composition, the yeast is much better protected against the rehydration step and consequent loss of gassing power. The present hvention therefore provides a dry yeast composition comprising 69-97.9 % (w/w) yeast (as yeast dry matter) and 0.1-10 % (w/w) of a salt of a C₁₂-C₂₄ fatty acid and 0-5 % (w/w) of a formulation aid and 0-10 % (w/w) of a dough or bread improving processing aid (all based on the total weight of the composition) and 2-8 % (w/w) water (based on the weight of the yeast dry matter). The advantage of these compositions, compared to prior art compositions lacking the fatty acid salt, is an improved water resistance during rehydration of the composition. This improved water resistance results in a reduced loss of gassing power of the yeast cells. The loss in gassing power after rehydration of the dry yeast is for some embodiments of the invention practically nihil. The compositions can therefore advantageously be used for the preparation of dough and baked products thereof with an improved volume. The dry yeast composition of the present invention may be of the active dry yeast type (ADY) or, more preferably, of the instant dry yeast type (IDY). Both types, ADY and IDY are described hereinbefore.

The fatty acid salt may be present between 0.1-10%, preferably between 0.25% and 7.5%, more preferably between 0.50 and 5% and most preferably between 1.25 and 3.75%. The fatty acid is preferably a linear, saturated fatty acid having 12 (lauric acid), 14 (myristic acid), 16 (palmitic acid), 18 (stearic acid), 20 (eicosanoic acid), 22 (docosanoic acid) or 24 (tetracosanoic acid) carbon atoms. More preferably, the fatty acid is palmitic acid or stearic acid, most preferred is stearic acid. The cation of the fatty acid salt may be a mono- or divalent metal ion, preferably a divalent metal ion and is more preferably calcium, magnesium or zinc. Most preferred is calcium. The fatty acid salt used in the composition of the invention may also be a mixture of various fatty acid salts. The most preferred fatty acid salt is calcium stearate.

The water content of the dry yeast composition may be between 2 and 8%, preferably between 2 and 7%, more preferably between 2 and 6% and most preferably between 2 and 5% (based on the weight of the yeast dry matter).

Formulation aids are defined herein as compounds that are used for the sole purpose of formulating the dry yeast product, without the necessity to produce any effect on the properties of the dough and/or the baked product made from the dough. Well known examples of such formulation aids are citric acid esters of glycerol-monostearate or sorbitan monostearate (see Reed, G. and Nagodawithana, T.W. (1991) YeastTechnology, 2nd ed., pp 304-305, Van Nostrand Reinhold, New York). Most preferred is sorbitan monostearate. Another example of a formulation aid is an adhesive as has been used in EP-A-0659344 for sticking enzyme particles to yeast particles.

The yeast may be any suitable baker's yeast or wine yeast, preferably belonging to the genus *Saccharomyces,* in particular *Saccharomyces cerevisiae.*

The composition of the present invention may further contain one or more processing aids. Processing aids are defined herein as compounds that improve the handling properties of the dough and/or the final properties of the baked products. Dough properties that may be improved comprise machineability, gas retaining capacity, etcetera. Properties of the baked products that may be improved comprise loaf volume, crust crispiness, crumb texture and softness and shelf life. These dough and/or baked product improving processing aids can be divided into two groups: chemical additives and enzymes. Suitable chemical additives are oxidizing agents such as ascorbic acid, bromate and azodicarbonamide and/or reducing agents such as L-cysteine, and glutathione. A preferred oxidizing agent is ascorbic acid, which may be added to the dry yeast composition of the invention in such an amount b give between 5 and 300 mg ascorbic acid per kg flour. Other suitable chemical additives are emulsifiers acting as dough conditioners such as diacetyl tartaric esters of mono/diglycerides (DATEM), sodium stearoyl lactylate (SSL) or calcium stearoyl lactylate (CSL), or acting as crumb softeners such as glycerol monostearate (GMS) or bile salts, fatty materials such as triglycerides (fat) or lecithin and others. Preferred emulsifiers are DATEM, SSL, CSL or GMS. Preferred bile salts are cholates, deoxycholates and taurodeoxychotates,

Suitable enzymes are starch degrading enzymes, arabinoxylan- and other hemicellulose degrading enzymes, cellulose degrading enzymes, oxidizing enzymes, fatty material splitting enzymes, protein degrading enzymes. Preferred starch degrading enzymes are endo- and exo-acting amylolytic enzymes such as alpha-amylase, beta-amylase and glucoamylase. Preferred arabinoxylan degrading enzymes are pentosanases, hemicellulases, xylanases and/or arabinofuranosidases, in particular xylanases from *Aspergillus* of *Bacillus* species. Preferred cellulose degrading enzymes are cellulases (i.e. endo-1,4-beta-glucanases) and cellobiohydrolases, in particular from *Aspergillus, Trichoderma* or *Humicola* species. Preferred oxidizing enzymes are lipoxygenases, glucose oxidases, sulfhydryl oxidases, hexose oxidases, pyranose oxidases and laccases. Preferred fatty material splitting enzymes are lipases, in particular fungal lipases from *Aspergillus* or Humicola species, phospholipases such as phospholipase A1 and/or A2 and galactolipases. Preferred protein-degrading enzymes are endo-acting proteinases such as those belonging to the classes thiolproteases, metalloproteases, serine proteases and aspartyl proteases, as well as exo-acting proteinases, also referred to as peptidases, belonging to the class of aminopeptidases and carboxypeptidases. The enzymes may originate from animal, plant or microbial origin and they may be obtained from these sources by classical processes known in the art, or, alternatively, they may be produced via recDNA technology. A preferred production process comprises fermentation processes in which fungi, yeast or bacteria are grown and produce the desired enzymes, either inherently or as a result of genetic modification (recDNA technology) These processes are well known in the art. Preferably, the enzymes are secreted by the microorganisms into the fermentation broth. At the end of the fermentation process, the cell biomass is usually separated and, depending on the enzyme concentration in the broth, the latter may be concentrated further and optionally washed by known techniques such as ultrafiltration. Optionally, the enzyme concentrates or a mixture of such concentrates may be dried by known techniques such as spray drying.

In a second aspect, the invention provides a process for the production of the composition of the present invention, which comprises the step of mixing a suitable yeast composition with a suitable form of the fatty acid salt. In one embodiment, instant dry yeast (IDY) is mixed with a dry fatty acid salt. Hereto, the instant dry yeast may be mixed in a batch or continuous process with a finely dispersed powder of the fatty acid salt. A large variety of the latter is commercially available. A preferred particle size diameter distribution of the fatty acid salt is given by d₁₀=2µm, d₅₀=6µm and d₉₀=20µm. The mixing process can be performed in a Lödige or Nautamixer system according to known methods. In another embodiment, liquid yeast, preferably cream yeast, is mixed with the fatty acid salt and the resultant mixture is filtered, extruded and dried according to known methods. In a further embodiment a yeast cake is crumbled and mixed with a dry fatty acid salt and the resultant mixture is extruded and dried.

In case a formulation aid such as sorbitan monostearate is used, IDY including sorbitan monostearate (e.g. 1 % (w/w)) is mixed with the dry fatty acid salt. In the case of the liquid yeast, the fatty acid salt may be mixed first with an aqueous emulsion of sorbitan monostearate, prepared by first melting the sorbitan monostearate and mixing the melt with warm water, preferably between 65 and 75°C, and adding the sorbitan monostearate/fatty acid salt mixture thus obtained to the liquid yeast and subsequently filtering, extruding and drying, according to known methods, the mixture to give the dry yeast composition of the invention. Alternatively, the fatty acid salt may be added to molten sorbitan stearate after which the resulting suspension is added to warm water, preferably between 65 and 75°C, and subsequently added to the liquid yeast followed by filtering, extruding and drying, according to known methods, to give the dry yeast composition of the invention.

In case the dry yeast compositions of the invention contain one or more processing aids, the dry yeast compositions may be prepared essentially as described for dry yeast compositions lacking the fatty acid salt in EP-A-0619947 (a homogeneous formulation of yeast and processing aids), EP-A-0659344 (a mixture of granular processing aids and yeast particles where the granular processing aids are stuck on to the yeast particles using an adhesive) or EP-A-1090553 (a mixture of granular processing aids and yeast particles having substantially the same size).

In case the dry yeast compositions of the invention contain both one or more formulation aids and one or more processing aids, a combination of the various steps herein described before may be used to obtain the desired dry yeast composition.

In a third aspect, the invention provides a hermetically sealed packaging means containing the dry yeast composition of the invention whereby the packaging means containing the dry yeast composition is flushed with an inert gas, such as N, prior to sealing or the packaging means containing the dry yeast composition is under vacuum. Suitable packaging means are those that are currently used for the known active (ADY) or instant (IDY) dry yeast, such as nitrogen flushed tins or aluminium foil pouches with low permeability to water vapour and gaseous oxygen (e.g. see Reed, G. and Nagodawithana, T.W. (1991) Yeast Technology, 2nd ed., pp 306-307, Van Nostrand Reinhold, New York). These packaging means ensure a good storage stability and usually not more than 1 % gassing power per month is lost, generally less than 10% per year. The dry yeast compositions of the invention can thus be packed in any desired quantity, e.g. 500 g, 10 kg or 20 kg.

In a fourth aspect, the invention provides a process for the production of dough comprising the addition of the dry yeast composition of the present inventbn. The dry yeast composition may be added directly to the other, well-known dough ingredients (such as flour, water, salt), or the dry yeast composition may be rehydrated prior to addition to the other dough ingredients, all depending on local use and/orthe baker's preference.

In a fifth aspect, the invention provides a process for the production of a baked product from a dough, prepared as described above, according to methods known in the art.

### Materials and Methods

### Gassing power of the yeast compositions of the present invention.

### Test a:

This test is carried out under optimal instant yeast conditions. 300 mg of a dry yeast composition is mixed with 62.5 g of flour. After addition of 39 ml of a solution containing 1.25 g of NaCl, the mass is mixed for 6 minutes at room temperature (22±2°C) into a dough and placed in a water bath at 28°C. The volume of the gas produced within the period from 10 to 130 minutes after the start of mixing was determined in ml at 28°C and 760 mm Hg.

### Test b1:

Identical to Test a except that the yeast is wetted as a monolayer of particles on the water surface in the testing pot containing 20 ml of water at 20°C, thus allowing every particle to come directly into contact with water. Then 19 ml of a solution containing 1.25 g NaCl and the flour are added.

### Test b2: Identical to Test b1 but with a water temperature of 10°C

### Baking experiments with the yeast compositions of the present invention

20 g of a dry yeast composition, as indicated in the examples, was rehydrated while stirring in 1120 g water of 20°C. The resulting suspension was added to 2000 g of flour (Ibis^{®}, Meneba, The Netherlands), 30 g salt and 6 gram of a bread improver consisting of 1.2% ascorbic acid, 0.2% α-amylase (Fermizyme^{®} P-500, DSM Bakery Ingredients, Delft, The Netherlands), 0.6% hemicellulase (Fermizyme^{®} HSP-6000, DSM Bakery Ingredients, Delft, The Netherlands), 20% soy flour and 78% native starch. The dough was mixed and kneaded in a spiral kneader for 2 minutes at first speed and for 10 minutes at second speed. The dough was divided in pieces of 550 g and left for 5 minutes at 35°C and 80% RH. Intermediate proofing was done for 50 minutes at 35°C and 80% RH. Final proofing was done for 45 minutes in tins after moulding at length pieces of 25 cm at 35°C and 80%RH. Baking was done at 235 °C for 25 minutes. After 1 hour of cooling down, the volume of the bread was measured using the well known displaced rapeseed method.

### Example 1

### Water resistance of dry yeast compositions made by mixing dry fatty acid salts with instant dry yeast

1000 g of commercially available instant dry yeast (Fermipan^{®} Red, DSM Bakery Ingredients, Delft, The Netherlands) was mixed in a Hobart mixer for 10 minutes with 10 g of a dry metal salt of stearic acid (Peter Greven FettChemie, GmbH). The gassing power of the yeast compositions was measured according to Tests a, b1 and b2 (see Materials and Methods).

**Table 1.**

| Addition | Test a | Test b1 | Test b2 |
|---|---|---|---|
| None | 145 ml = 100% | 74 ml = 100% | 28 ml = 100% |
| calcium stearate | 103% | 126% | 171% |
| magnesium stearate | 103% | 118% | 150% |
| zinc stearate | 103% | 107% | 118% |
| sodium stearate | 101% | 96% | 107% |

The results in Table 1 show that the presence of the stearate salt in the dry yeast composition significantly improves the water resistance of the yeast at 20°C (Test b1), the effect being much more pronounced at 10°C (Test b2). Table 1 also shows that the divalent metals calcium, magnesium and zinc are in particular effective, in contrast to the monovalent metal sodium, which is much less effective.

When tests a and b were repeated after storage of the yeast compositions for 7 days at 47.5°C, the same improvements in water resistance were observed. This demonstrates that the stearic acid salts are not harmful to the yeast.

### Example 2

### Effect of the fatty acid salt content on the water resistance of dry yeast compositions

Dry yeast compositions containing calcium stearate were made according to Example 1 with concentrations as indicated in Table 2. The gassing power was measured according to test b. The results in Table 2 show that with increasing amounts of calcium stearate in the dry yeast composition, the water resistance of the yeast is improved accordingly, both at 20°C (Test b1) as well as 10°C (Test b2). The maximum gassing powers approach the values obtained for the non-rehydrated yeast composition (as tested by Test a) which means that almost complete water resistance was obtained (i.e. no substantial loss in gassing power upon rehydration of the dry yeast composition).

**Table 2.**

| calcium stearate (% (w/w)) | Test b1 | Test b2 |
|---|---|---|
| 0.0 | 75 ml = 100% | 35 ml = 100% |
| 1.0 | 120% | 171% |
| 2.0 | 162% | 240% |
| 2.5 | 163% | 274% |
| 3.0 | 168% | 291% |
| 4.0 | 167% | 289% |
| 5.0 | 187% | 291% |
| 10.0 | 169% | 280% |

### Example 3

### Water resistance of dry yeast compositions prepared by different methods

Dry yeast compositions containing 1 (w/w)% calcium stearate were prepared as indicated in Table 3 (B-F) and compared with a commercially available instant dry yeast without calcium stearate (but containing ca 1 % sorbitan monostearate- (A)),

Composition B was made by dry mixing of the instant dry yeast (A) with dry calcium stearate powder. Composition C is instant dry yeast but made without sorbitan monostearate. Composition D was made by dry mixing of the instant dry yeast (C) with dry calcium stearate powder. For the preparation of composition E, sorbitan monostearate was melted by heating it to its melting temperature (ca 65°C), after which the dry calcium stearate was added to the molten sorbitan monostearate. The suspension was added to water of 75°C and stirred to give an emulsion. This mixture was subsequently added to crumbled yeast cake, mixed and dried. For the preparation of composition F, sorbitan monostearate was dispersed in water (10% wt/v) after which dry calcium stearate was added. This mixture was subsequently heated to 80°C and stirred to give the emulsion. After cooling the emulsion was added to compressed yeast, mixed and dried. The gassing power of the dry yeast compositions thus obtained was measured by tests a and b (see Materials and Methods).

The results in Table 3 show that improvement of the water resistance of the yeast could be established irrespective of how the dry yeast composition was prepared. Nevertheless, the largest improvement was obtained after the dry-dry mixing method (instant dry yeast with dry calcium stearate), both in the case that the IDY was made with (A/B) and without (C/D) sorbitan monostearate.

**Table 3**

| Dry yeast composition | | Test a | Test b1 | Test b2 |
|---|---|---|---|---|
| A | Instant dry yeast (Fermipan^{®} Red) | 145 ml = 100% | 77 ml = 100% | 31 ml = 100% |
| B | Mixing of instant dry yeast (A) with dry calcium stearate. | 106% | 114% | 125% |
| C | Instant dry yeast without sorbitan monostearate | 100% | 24% | 52% |
| D | Mixing of instant dry yeast (C) with dry calcium stearate | 97% | 104% | 140% |
| E | Mixing of dry calcium stearate with molten sorbitan monostearate, addition to yeast cake and subsequently dried | 105% | 116% | 131% |
| F | Mixing of dry calcium stearate with cold sorbitan monostearate and water, heating to 80°C addition to yeast cake and subsequently dried | 105% | 106% | 115% |

### Example 4

### Baking performance of the dry yeast compositions

The baking performance of the dry yeast composition B (see Example 3) was determined by measuring the loaf volume of breads baked using said compositions. The materials and methods section describes details of the recipe used and how rehydration of the dry yeast composition was carried out.

Table 4 shows that dry yeast compositions with increasing amounts of calcium stearate give rise to baked breads with increased volume. This demonstrates that there is a good correlation between the improved gassing power as measured with Tests b1 and b2 and the performance of the dry yeast composition in baking.

**Table 4**

| calcium stearate content of dry yeast composition B | Loaf volume |
|---|---|
| 0 % (w/w) | 100% |
| 1 % (w/w) | 106% |
| 2 % (w/w) | 112% |

### Example 5

### Baking performance of the dry yeast compositions

A dry yeast composition (G) containing 2.5% calcium stearate was prepared as described in Example 3 for composition B. A second dry yeast composition (H) was made by mixing Fermipan^{®} Red with a dry mixture composed of 84.5% calcium stearate, 0.4% glucose oxidase (Fermizyme^{®} GO-10000), 2.5% HSP-6000, 0.5% P-500, 2% Lipopan-F^{®} (Novozymes, Denmark), 0.5% Lipopan-50^{®} (Novozymes, Denmark) and 10% ascorbic acid in a ratio as to give 2.5% calcium stearate h the final composition.

The baking performance of compositions G and H and the control Fermipan^{®} Red was determined by measuring the loaf volume of breads baked using said compositions. The materials and methods section describes details of the recipes used and how rehydration of the dry yeast composition was carried out.

**Table 5**

| Dry yeast composition | Loaf volume relative to Fermipan^{®} Red |
|---|---|
| Fermipan^{®} Red | 100% |
| G | 110% |
| H | 120% |

## Claims

1. A dry yeast composition comprising
• 69-97.9 % (w/w) yeast (as yeast dry matter); and
• 0.1-10 % (w/w) of a salt of a C₁₂-C₂₄ fatty acid; and
• 0-5 % (w/w) of a formulation aid; and
• 0-10 % (w/w) of a dough or bread improving processing aid all based on the total weight of the composition; and
• 2-8 % (w/w) water, based on the weight of the yeast dry matter.

2. A composition according to claim 1 wherein the dry yeast composition is of the instant dry yeast type.

3. A composition according to claim 1 wherein the dry yeast composition is of the active dry yeast type.

4. A composition according to any of the preceding claims wherein the fatty acid salt is present between 0.25% and 7.5%, preferably between 0.50 and 5%, more preferably between 1.25 and 3.75%.

5. A composition according to any of the preceding claims wherein the fatty acid is a linear, saturated fatty acid having 12 (lauric acid), 14 (myristic acid), 16 (palmitic acid), 18 (stearic acid), 20 (eicosanoic acid), 22 (docosanoic acid) or 24 (tetracosanoic acid) carbon atoms.

6. A composition according to any of the preceding claims wherein the cation of the fatty acid salt is a metal ion, preferably a divalent metal, more preferably Ca⁺⁺, Mg⁺⁺ or Zn⁺⁺.

7. A composition according to any of the preceding claims wherein the fatty acid salt is calcium stearate.

8. A composition according to any of the preceding claims wherein the formulation aid is sorbitan monostearate.

9. A composition according to any of the preceding claims wherein the yeast is baker's yeast, preferably belonging to the genus *Saccharomyces,* in particular *Saccharomyces cerevisiae.*

10. A composition according to any of the preceding claims wherein the processing aid is a chemical additive and/or an enzyme.

11. A composition according to claim 10 wherein the chemical additive is selected from the group consisting of oxidizing agents, reducing agents, emulsifiers, bile salts, and the enzyme is selected from the group consisting of starch degrading enzymes, arabinoxylan degrading enzymes, hemicellulose degrading enzymes, cellulose degrading enzymes, oxidizing enzymes, fatty material splitting enzymes and protein degrading enzymes.

12. A process for the production of a composition according to claims 1-11 comprising the steps of mixing a yeast composition with the fatty acid salt.

13. A process according to claim 12 wherein the yeast composition is a dry yeast composition, preferably instant dry yeast.

14. A process according to claim 12 wherein the yeast composition is a liquid yeast composition, preferably cream yeast and the resultant mixture is filtered, extruded and dried.

15. A process according to claim 14 wherein the fatty acid salt is mixed with a formulation aid, preferably sorbitan monostearate, and the resultant mixture is added to the liquid yeast composition.

16. A process according to claim 12 wherein the yeast composition is yeast cake and the resultant mixture is extruded and dried.

17. A hermetically sealed packaging means containing the dry yeast composition according to anyone of claims 1-11 whereby the packaging means containing the dry yeast composition is flushed with an inert gas prior to sealing or the packaging means containing the dry yeast composition is under vacuum.

18. A method of preventing loss of yeast activity during rehydration of a dry yeast composition, which comprises incorporating 0.1-10 % (w/w) of a salt of a C₁₂-C₂₄ fatty acid into the dry yeast composition prepared according to anyone of the processes of claims 12-15.

19. A process for the production of dough comprising the addition of the composition according to anyone of claims 1-11 to other dough ingredients.

20. A process according to claim 19 wherein the dry yeast composition according to anyone of claims 1-11 is rehydrated prior to addition to the other dough ingredients.

21. A process for the production of a baked product from a dough as prepared by the process of claim 19 or 20.

22. Use of a salt of a C₁₂-C₂₄ fatty acid for preventing loss of yeast activity during rehydration of a dry yeast composition.

23. Use of a dry yeast composition according to anyone of claims 1-11 for the preparation of a dough and the baked product thereof.

## Patentansprüche

1. Trockenhefe-Zusammensetzung, umfassend
• 69 bis 97,9 % (G/G) Hefe (als Hefetrockenmasse) und
• 0,1 bis 10 % (G/G) eines Salzes einer C₁₂₋₂₄-Fettsäure und
• 0 bis 5 % (G/G) einer Formulierungshilfe und
• 0 bis 10 % (G/G) einer Teig- oder Brot-verbessernden Verarbeitungshilfe, alles basierend auf dem Gesamtgewicht der Zusammensetzung, und
• 2 bis 8 % (G/G) Wasser, basierend auf dem Gewicht der Hefetrockenmasse.

2. Zusammensetzung gemäß Anspruch 1, wobei die Trockenhefe-Zusammensetzung vom Instant-Trockenhefe-Typ ist.

3. Zusammensetzung gemäß Anspruch 1, wobei die Trockenhefe-Zusammensetzung vom Aktiv-Trockenhefe-Typ ist.

4. Zusammensetzung gemäß mindestens einem der vorhergehenden Ansprüche, wobei das Salz der Fettsäure zwischen 0,25 und 7,5 %, vorzugsweise zwischen 0,50 und 5 % und insbesondere bevorzugt zwischen 1,25 und 3,75 % vorhanden ist.

5. Zusammensetzung gemäß mindestens einem der vorhergehenden Ansprüche, wobei die Fettsäure eine lineare gesättigte Fettsäure mit 12 (Laurinsäure), 14 (Myristinsäure), 16 (Palmitinsäure), 18 (Stearinsäure), 20 (Eicosansäure), 22 (Docosansäure) oder 24 (Tetracosansäure) Kohlenstoffatomen ist.

6. Zusammensetzung gemäß mindestens einem der vorhergehenden Ansprüche, wobei das Kation des Salzes der Fettsäure ein Metallion ist, vorzugsweise ein zweiwertiges Metall, insbesondere bevorzugt Ca⁺⁺, Mg⁺⁺ oder Zn⁺⁺.

7. Zusammensetzung gemäß mindestens einem der vorhergehenden Ansprüche, wobei das Salz der Fettsäure Calciumstearat ist.

8. Zusammensetzung gemäß mindestens einem der vorhergehenden Ansprüche, wobei die Formulierungshilfe Sorbitanmonostearat ist.

9. Zusammensetzung gemäß mindestens einem der vorhergehenden Ansprüche, wobei die Hefe eine Bäckerhefe ist, die vorzugsweise der Gattung Saccharomyces angehört, insbesondere Saccharomyces cerevisiae.

10. Zusammensetzung gemäß mindestens einem der vorhergehenden Ansprüche, wobei die Verarbeitungshilfe ein chemisches Additiv und/oder ein Enzym ist.

11. Zusammensetzung gemäß Anspruch 10, wobei das chemische Additiv ausgewählt ist aus der Gruppe bestehend aus Oxidationsmitteln, Reduktionsmitteln, Emulgatoren, Gallensalzen, und das Enzym ausgewählt ist aus der Gruppe bestehend aus stärkeabbauenden Enzymen, Arabinoxylan-abbauenden Enzymen, Hemicelluloseabbauenden Enzymen, Cellulose-abbauenden Enzymen, oxidierenden Enzymen, Fettmaterial-spaltenden Enzymen und Protein-abbauenden Enzymen.

12. Verfahren zur Herstellung einer Zusammensetzung gemäß den Ansprüchen 1 bis 11, das die Schritte des Mischens einer Hefezusammensetzung mit dem Salz der Fettsäure umfaßt.

13. Verfahren gemäß Anspruch 12, wobei die Hefezusammensetzung eine Trockenhefe-Zusammensetzung ist, vorzugsweise Instant-Trockenhefe.

14. Verfahren gemäß Anspruch 12, wobei die Hefezusammensetzung eine flüssige Hefezusammensetzung ist, vorzugsweise Cremehefe ("cream yeast"), und wobei die resultierende Mischung filtriert, extrudiert und getrocknet wird.

15. Verfahren gemäß Anspruch 14, wobei das Salz der Fettsäure mit einer Formulierungshilfe, vorzugsweise Sorbitanmonostearat, gemischt wird und die resultierende Mischung zu flüssiger Hefezusammensetzung zugegeben wird.

16. Verfahren gemäß Anspruch 12, wobei die Hefezusammensetzung Preßhefe ("yeast cake") ist und die resultierende Mischung extrudiert und getrocknet wird.

17. Hermetisch versiegeltes Verpackungsmittel, das die Trockenhefe-Zusammensetzung gemäß irgendeinem der Ansprüche 1 bis 11 enthält, wobei das Verpackungsmittel, das die Trockenhefe-Zusammensetzung enthält, vor der Versiegelung mit einem inerten Gas gespült wird, oder das Verpackungsmittel, das die Trockenhefe-Zusammensetzung enthält, unter Vakuum steht.

18. Verfahren zur Verhinderung des Verlusts an Hefeaktivität während der Rehydratisierung einer Trockenhefe-Zusammensetzung, umfassend die Aufnahme von 0,1 bis 10 % (G/G) eines Salzes einer C₁₂-₂₄-Fettsäure in die Trockenhefe-Zusammensetzung, die gemäß mindestens einem der Verfahren der Ansprüche 12 bis 15 hergestellt wurde.

19. Verfahren zur Herstellung von Teig, umfassend das Hinzufügen der Zusammensetzung gemäß mindestens einem der Ansprüche 1 bis 11 zu den anderen Teiginhaltsstoffen.

20. Verfahren gemäß Anspruch 19, wobei die Trockenhefe-Zusammensetzung gemäß mindestens einem der Ansprüche 1 bis 11 vor dem Hinzugeben zu den anderen Teiginhaltsstoffen rehydratisiert wird.

21. Verfahren zur Herstellung eines Backprodukts aus einem Teig, der gemäß dem Verfahren von Anspruch 19 oder 20 hergestellt ist.

22. Verwendung eines Salzes einer C₁₂-₂₄-Fettsäure zur Verhinderung des Hefeaktivitätsverlusts während der Rehydratisierung einer Trockenhefe-Zusammensetzung.

23. Verwendung einer Trockenhefe-Zusammensetzung gemäß mindestens einem der Ansprüche 1 bis 11 zur Herstellung eines Teigs und des daraus gebackenen Produkts.

## Revendications

1. Composition de levure sèche comprenant
- de 69 à 97,9 % (poids/poids) de levure (en tant que matière sèche de levure) ; et
- de 0,1 à 10 % (poids/poids) d'un sel d'un acide gras en C₁₂-C₂₄ ; et
- de 0 à 5 % (poids/poids) d'un adjuvant de formulation ; et
- de 0 à 10 % (poids/poids) d'un adjuvant de traitement pour l'amélioration de la pâte ou du pain, tous sur la base du poids total de la composition ; et
- de 2 à 8 % (poids/poids) d'eau, sur la base du poids de la matière sèche de la levure.

2. Composition selon la revendication 1, dans laquelle la composition de levure sèche est du type levure sèche instantanée.

3. Composition selon la revendication 1, dans laquelle la composition de levure sèche est du type levure sèche active.

4. Composition selon l'une quelconque des revendications précédentes, dans laquelle le sel d'acide gras est présent entre 0,25 % et 7,5 %, de préférence entre 0,50 et 5 %, de manière encore préférable entre 1,25 et 3,75 %.

5. Composition selon l'une quelconque des revendications précédentes, dans laquelle l'acide gras est un acide gras saturé linéaire ayant 12 (acide laurique), 14 (acide myristique), 16 (acide palmitique), 18 (acide stéarique), 20 (acide eicosanoïque), 22 (acide docosanoïque) ou 24 (acide tétracosanoïque) atomes de carbone.

6. Composition selon l'une quelconque des revendications précédentes, dans laquelle le cation du sel d'acide gras est un ion métallique, de préférence un métal divalent, de manière encore préférable Ca⁺⁺, Mg⁺⁺ ou Zn⁺⁺.

7. Composition selon l'une quelconque des revendications précédentes, dans laquelle le sel d'acide gras est le stéarate de calcium.

8. Composition selon l'une quelconque des revendications précédentes, dans laquelle l'adjuvant de formulation est le monostéarate de sorbitane.

9. Composition selon l'une quelconque des revendications précédentes, dans laquelle la levure est de la levure de boulanger, de préférence appartenant au genre *Saccharomyces,* en particulier *Saccharomyces cerevisiae.*

10. Composition selon l'une quelconque des revendications précédentes, dans laquelle l'adjuvant de traitement est un additif chimique et/ou une enzyme.

11. Composition selon la revendication 10, dans laquelle l'additif chimique est choisi dans le groupe consistant en agents oxydants, agents réducteurs, émulsifiants, sels biliaires, et l'enzyme est choisie dans le groupe consistant en enzymes de dégradation de l'amidon, enzymes de dégradation de l'arabinoxylane, enzymes de dégradation de l'hémicellulose, enzymes de dégradation de la cellulose, enzymes oxydantes, enzymes de clivage des matières grasses et enzymes de dégradation des protéines.

12. Procédé de production d'une composition selon les revendications 1 à 11 comprenant les étapes de mélangeage d'une composition de levure avec le sel d'acide gras.

13. Procédé selon la revendication 12, dans lequel la composition de levure est une composition de levure sèche, de préférence de levure sèche instantanée.

14. Procédé selon la revendication 12, dans lequel la composition de levure est une composition de levure liquide, de préférence de la crème de levure, et le mélange résultant est filtré, extrudé et séché.

15. Procédé selon la revendication 14, dans lequel le sel d'acide gras est mélangé avec un adjuvant de formulation, de préférence du monostéarate de sorbitane, et le mélange résultant est ajouté à la composition de levure liquide.

16. Procédé selon la revendication 12, dans lequel la composition de levure est un gâteau de levure et le mélange résultant est extrudé et séché.

17. Moyen d'emballage hermétiquement fermé contenant la composition de levure sèche selon l'une quelconque des revendications 1 à 11, ledit moyen d'emballage contenant la composition de levure sèche étant balayé par un gaz inerte avant la fermeture hermétique ou le ledit moyen d'emballage contenant la composition de levure sèche étant sous vide.

18. Procédé permettant d'éviter la perte de l'activité de la levure durant la réhydratation d'une composition de levure sèche, ledit procédé comprenant l'incorporation de 0,1 à 10 % (poids/poids) d'un sel d'un acide gras en C₁₂-C₂₄ dans la composition de levure sèche préparée selon l'un quelconque des procédés des revendications 12 à 15.

19. Procédé de production de pâte comprenant l'addition de la composition selon l'une quelconque des revendications 1 à 11 à d'autres ingrédients de pâte.

20. Procédé selon la revendication 19, dans lequel la composition de levure sèche selon l'une quelconque des revendications 1 à 11 est réhydratée avant l'addition aux autres ingrédients de pâte.

21. Procédé de production d'un produit cuit à partir d'une pâte telle que préparée par le procédé de la revendication 19 ou 20.

22. Utilisation d'un sel d'un acide gras en C₁₂-C₂₄ pour prévenir la perte de l'activité de la levure durant la réhydratation d'une composition de levure sèche.

23. Utilisation d'une composition de levure sèche selon l'une quelconque des revendications 1 à 11 pour la préparation d'une pâte et du produit de la cuisson de celle-ci.
